# EUROPÄISCHE PATENTANMELDUNG

(11) **EP 3 407 155 A1**
(43) Veröffentlichungstag der Anmeldung: **28.11.2018**
(21) Anmeldenummer: 18183353.4
(22) Anmeldetag: 08.10.2005
(51) Int. Cl.: G05D 23/13

(54) **SANITÄRES THERMOSTATMISCHVENTIL**

(30) Priorität: 20.10.2004 DE 102004050996
(62) Teilanmeldung aus: 05789238.2
(71) Anmelder: Hansa Armaturen GmbH, 70567 Stuttgart (DE)
(72) Erfinder: Schmid, Lars, 70567 Stuttgart (DE)
(74) Vertreter: Ostertag & Partner Patentanwälte mbB

(57) **Zusammenfassung**

Ein Thermostatmischventil besitzt ein Gehäuse (12), das einen Kaltwasserzulauf (14), einen Warmwasserzulauf (16) und einen Mischwasserzulauf (18) aufweist. In dem Gehäuse (12) ist ein temperaturempfindliches und vom Mischwasser anströmbares Thermostatelement (20) angeordnet, das ein Regelelement (21) ansteuert. Das Thermostatelement (20) stützt sich normalerweise an einem Anschlag (29') ab. Mit einem Einstellorgan (28) kann die Position des Regelelements (21) im Gehäuse (12) verändert werden, um die Solltemperatur des Mischwassers einzustellen. Außerdem ist ein Spülorgan (30) vorgesehen, mit dem ein Anschlag (29') für das Thermostatelement (20) zumindest so weit abgehoben werden kann, dass dieses den Warmwasserzulauf (16) vollständig freigibt.

## Beschreibung

Die Erfindung betrifft ein sanitäres Thermostatmischventil mit
a) einem Gehäuse, das einen Kaltwasserzulauf, einen Warmwasserzulauf und einen Mischwasserauslauf aufweist;
b) einem im Gehäuse angeordneten, temperaturempfindlichen und vom Mischwasser anströmbaren Thermostatelement, das sich normalerweise einseitig an einem Anschlag abstützt;
c) einem vom Thermostatelement gesteuerten Regelelement; und
d) einem Einstellorgan für die Solltemperatur des Mischwassers, mit dem die Position des Regelelements im Gehäuse veränderbar ist.

Ein Thermostatmischventil der eingangs genannten Art ist beispielsweise aus der EP 0 973 083 B1 bekannt. Es wird im Sanitärbereich als thermostatischer Vormischer eingesetzt, mit dem die maximale Vorlauftemperatur für eine Sanitärarmatur voreingestellt werden kann.

Aus hygienischen Gründen, insbesondere um eine Ansiedlung von Legionellen zu vermeiden, müssen Sanitärarmaturen von Zeit zu Zeit thermisch desinfiziert werden. Dazu muß die Vorlauftemperatur an dem aus EP 0 973 083 B1 bekannten Vormischer durch einen Fachmann auf ca. 60° bis 70° C erhöht und nach erfolgtem Spülvorgang wieder neu eingestellt werden. Dies ist aufwendig und birgt die Gefahr, daß vergessen wird, die Vorlauftemperatur zurückzustellen, so daß sich Benutzer mit zu heißem Wasser verbrühen können.

Es ist daher eine Aufgabe der Erfindung, ein Thermostatmischventil anzugeben, bei dem eine thermische Desinfektion einfach vorgenommen werden kann, ohne daß die Solltemperatureinstellung des Thermostatmischventils verändert werden muß.

Die Aufgabe wird gelöst durch ein Thermostatmischventil nach Anspruch 1. Vorteilhafte Ausgestaltungen sind den abhängigen Ansprüchen zu entnehmen.

Ein Thermostatmischventil der eingangs genannten Art besitzt erfindungsgemäß
e) ein Spülorgan, mit dem der Anschlag für das Thermostatelement zumindest soweit abgehoben werden kann, daß dieses den Warmwasserzulauf vollständig frei gibt.

Das Spülorgan besitzt vorteilhaft einen Anlüfthebel. Dieser ermöglicht eine einfache Bedienung.

Bei einer vorteilhaften Ausführungsform wird das Thermostatelement von einer Vorspannfeder gegen den Anschlag gehalten. Der Anschlag ist über eine Sicherheitsfeder an dem Einstellorgan abgestützt und der Anlüfthebel ist so ausgebildet, daß er bei Betätigung die Sicherheitsfeder zusammenspannt und das Thermostatelement von der Vorspannfeder in eine Position verschoben wird, in der das Mischventil den Warmwasserzulauf frei gibt.

Dies ermöglicht eine einfache und kompakte Bauform des Thermostatmischventils.

Bei einer alternativen Ausführungsform, bei der das Thermostatelement ebenfalls von einer Vorspannfeder gegen den Anschlag gehalten wird und der Anschlag über eine Sicherheitsfeder an dem Einstellorgan abgestützt ist, ist das Spülorgan so ausgebildet, daß es bei Betätigung die Sicherheitsfeder entspannt und das Regelelement auf diese Weise von der Vorspannfeder in eine Position verschoben wird, in der es den Warmwasserzulauf frei gibt.

Vorzugsweise ist eine abnehmbare Abdeckkappe vorgesehen, die im aufgesetzten Zustand das Einstellorgan verdeckt und die so bemessen ist, daß sie nur in der unbetätigten Stellung des Einstellorgans aufgesetzt werden kann.

Durch die Abdeckkappe ist die Funktion des Einstellorgans verdeckt und nur dem Fachpersonal zugänglich, so daß Benutzer nicht verleitet werden, an dem Thermostatmischventil herumzustellen. Durch die Bauform der Abdeckkappe wird zudem verhindert, daß nach erfolgter Spülung vergessen wird, das Einstellorgan wieder zurückzustellen.

Vorteilhaft ist eine Feststellschraube zum Arretieren des Einstellorgans vorgesehen. Dies verhindert wirksam, daß bei einem Spülvorgang versehentlich die Einstellung des Thermostatmischventils verstellt wird.

Bei einer weiteren bevorzugten Ausführungsform umfaßt das Spülorgan einen abnehmbaren Schlüssel. Eine Einstellung des Thermostatmischventils kann dadurch nur vom Fachpersonal vorgenommen werden, das im Besitz eines solchen Schlüssels ist.

Das erfindungsgemäße Thermostatmischventil kann sowohl als Vormischventil ausgebildet als auch in eine thermostatische Sanitärarmatur integriert sein.

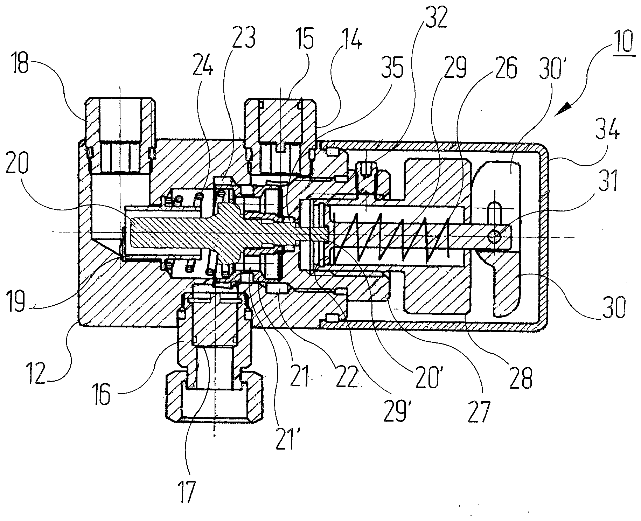

Im folgenden wird ein Ausführungsbeispiel der Erfindung anhand der Zeichnung näher erläutert. Die einige Figur zeigt einen Schnitt durch ein als Vormischventil ausgebildetes Thermostatmischventil.

Das Thermostatmischventil 10 besitzt ein Gehäuse 12 mit einem Warmwasserzulauf 16, einem Kaltwasserzulauf 14 und einem Mischwasserauslauf 18. Im Kaltwasserzulauf 14 ebenso wie im Warmwasserzulauf 16 befinden sich Rückschlagventile 15 bzw. 17, die verhindern, daß Wasser aus dem Thermostatmischventil 10 in die Zuführungsleitungen zurückströmen kann.

Im Inneren des Gehäuses 12 ist ein als Thermostatelement ausgebildetes Dehnstoffelement 20 angeordnet, das ein Mischventil betätigt. Das Dehnstoffelement 20 an sich bekannter Bauart, welches hier nur schematisch als kompaktes Bauteil dargestellt ist, enthält einen in einem Gehäuse untergebrachten Dehnstoff, beispielsweise ein Wachs, der sich bei Erwärmung ausdehnt und einen Druckstift 20' aus dem Gehäuse herausschiebt und bei Abkühlung zusammenzieht und so ein Zurückschieben des Druckstiftes 20' zuläßt.

Das von dem Dehnstoffelement 20 betätigte Mischventil weist eine an sich bekannte Bauart auf. Es umfaßt einen ersten Ringraum 23, in den Warmwasser aus dem Warmwasserzulauf 16 strömt, einen zweiten Ringraum 22, in den Kaltwasser aus dem Kaltwasserzulauf 14 strömt, und eine Regelhülse 21, die verschiebbar zwischen dem ersten und dem zweiten Ringraum 23, 22 angeordnet ist. Je nach Stellung der Regelhülse 21 verschließt sie mehr oder weniger einen Spalt zum Ringraum 23 und öffnet mehr oder weniger einen Spalt zum Ringraum 22 oder umgekehrt. Die Regelhülse 21 besitzt mehrere zylindrische achsparallele Bohrungen 21', durch die, wenn die Regelhülse 21 einen Spalt zum Ringraum 22 freigibt, Kaltwasser an dem Dehnstoffelement 20 vorbei durch eine Hülse 19, die als Mischraum dient, zum Mischwasserauslauf 18 fließen kann. Gibt die Regelhülse 21 einen Spalt zum Ringraum 23 frei, so kann Warmwasser durch die Hülse 19 zum Mischwasserauslauf 18 fließen.

Die Regelhülse 21 sitzt auf einer stufenförmig abgesetzten Nabe des Dehnstoffelements 20. Das mit Dehnstoff gefüllte linke Ende des Dehnstoffelementes 20 ragt in die Hülse 19 hinein und wird dort von Mischwasser angeströmt. Wärmeres Mischwasser sorgt so dafür, daß sich der Dehnstoff ausdehnt und der Druckstift 20' aus dem Dehnstoffelement 20 weiter herausgeschoben wird. Bei kälterem Mischwasser hingegen zieht sich der Dehnstoff zusammen und eine Vorspannfeder 24 sorgt dafür, daß das Dehnstoffelement 20 gegen den Druckstift 20' wieder in die in der Figur rechte Stellung verschoben wird.

Der Druckstift 20' drückt gegen einen Anschlag 29', der von einem tellerförmigen Ende einer Stange 29 gebildet wird, das von einer Sicherheitsfeder 26 gegen das Dehnstoffelement 20 gehalten wird. Die Sicherheitsfeder 29 hat eine große Federkonstante und kann im normalen Betrieb des Thermostatmischventils 10 als starr angenommen werden. Ihre Aufgabe besteht darin, eine Zerstörung des Dehnstoffelements 20 zu verhindern, wenn dieses bei maximaler Ausdehnung an der linken Seite auf dem Warmwassersitz am Ringraum 23 und auf der rechten Seite am Anschlag der Stange 29 sitzt. In diesem Fall gibt die Sicherheitsfeder 29 so viel nach, daß das Dehnstoffelement 20 nicht durch die eigene Ausdehnung am Anschlag kaputt gedrückt wird.

Wird der Druckstift 20' durch Ausdehnung des Dehnstoffs weiter aus dem Dehnstoffelement 20 herausgedrückt, so schiebt er das Dehnstoffelement 20 mit der Regelhülse 21 gegenüber dem Ende der Stange 29 nach links. Dadurch wird der Durchlaßspalt für Warmwasser am Ringraum 21 kleiner, der Durchlaßspalt für Kaltwasser am Ringraum 22 entsprechend größer. Es strömt somit mehr Kaltwasser und entsprechend weniger Warmwasser in den Mischraum der Hülse 19 und das Mischwasser wird kälter. Der Dehnstoff zieht sich dadurch wieder etwas zusammen und die Vorspannfeder 24 schiebt das Dehnstoffelement 20 und die Regelhülse 21 wieder ein wenig nach rechts, so daß wieder mehr Warmwasser und entsprechend weniger Kaltwasser in den Mischraum gelangt. Dies geschieht, bis sich ein Gleichgewicht entsprechend der eingestellten Solltemperatur eingestellt hat.

Stange 29 und Sicherheitsfeder 26 sind in der hohlen Achse eines Einstellgriffes 28 angeordnet, der zum Einstellen der Solltemperatur des Mischwassers dient. Der Einstellgriff 28 sitzt in einem Gewindeeinsatz 27 in dem Gehäuse 12 des Thermostatmischventils 10 und kann von Hand weiter in das Gehäuse 12 eingedreht oder aus diesem herausgedreht werden. Dies verändert die Position des Dehnstoffelements 20 in dem Thermostatmischventil 10 und damit die eingestellte Solltemperatur. Mit einem O-Ring 35 ist das Dehnstoffelement 20 gegen den Gewindeeinsatz 27 abgedichtet. Mit einer Madenschraube 32 mit Innensechskant kann der Einstellgriff 28 bei der gewünschten Solltemperatur arretiert werden um ein versehentliches Verstellen zu verhindern.

An dem äußeren Ende der Stange 29, das durch eine Bohrung aus dem Einstellgriff 28 herausragt, ist mit einem Zylinderstift 31 ein Anlüfthebel 30 beweglich befestigt. Der Zylinderstift 31 führt durch ein Langloch im Anlüfthebel 30. Der Anlüfthebel 30 liegt an der Stirnfläche des Einstellgriffs 28 an und kann über ein gerundetes Ende 30' gegen den Einstellgriff 28 verschwenkt werden. Da das gerundete Ende 30' des Anlüfthebels 30 länger als die halbe Breite des Anlüft hebels 30 ist, wird beim Schwenken des Anlüfthebels 30 die Stange 29 gegen die Federkraft der Sicherheitsfeder 26 aus dem Einstellgriff 28 herausgezogen und so der Gegenanschlag des Dehnstoffelementes 20 von diesem abgehoben. Da nun die Gegenkraft für die Vorspannfeder 24 fehlt, drückt diese das Dehnstoffelement 20 mit der Regelhülse 21 in die in der Zeichnung rechte Position, in der der Durchlaßspalt zum Ringraum 22 ganz geschlossen und der Durchlaßspalt zum Ringraum 23 ganz geöffnet ist. Somit kann nun Warmwasser mit der Vorlauftemperatur ungehindert durch den Mischraum zum Mischwasserauslauf 18 fließen. Da die Vorlauftemperatur in der Regel höher als die eingestellte Solltemperatur ist (60°-70° C), können nun Legionellen und andere Mikroorganismen abgetötet werden.

Während des normalen Betriebs verdeckt eine Abdeckkappe 34 den Einstellgriff 28 und den Anlüfthebel 30. Um eine Heißwasserspülung durchzuführen wird die Abdeckkappe 34 entfernt, die unverlierbar an einer Kette oder einem angegossenen Kunststoffaden hängt, und gibt den Anlüfthebel 30 frei. Der Anlüfthebel 30 kann nun betätigt werden. In betätigtem Zustand läßt sich die Abdeckkappe 34 nicht wieder aufsetzen. Dies verhindert, daß vergessen wird, den Anlüfthebel 30 nach erfolgter Heißwasserspülung wieder zurückzustellen. Wird der Anlüfthebel 30 wieder zurückgestellt, so begrenzt das Dehnstoffelement 20 die Temperatur des Mischwassers wieder auf den voreingestellten Wert. Die Schutzkappe 34 kann nun wieder aufgesetzt werden. Die Madenschraube 32 verhindert, daß beim Spülvorgang die Temperatureinstellung versehentlich verstellt wird.

Bei einer weiteren Ausführungsform ist der Anlüfthebel als abnehmbarer Schlüssel ausgeführt. Dadurch wird erreicht, daß nur Fachpersonal, welches im Besitz eines solchen Schlüssels ist, die Einstellung des Thermostatmischventil 10 verändern kann.

Im Ausführungsbeispiel ist das Thermostatmischventil 10 als Vormischventil ausgebildet, das vor einer normalen Sanitärarmatur installiert wird (nicht gezeigt). Das Vormischventil 10 wird unterhalb eines Waschtisches mit der Kaltwasser- und der Warmwasserleitung verbunden. Über ein T-Stück wird die Kaltwasserleitung zusätzlich direkt mit dem Kaltwasseranschluß der Sanitärarmatur oberhalb des Waschtisches verbunden. Der Warmwasseranschluß der Sanitärarmatur wird hingegen mit dem Mischwasserauslauf 18 des Vormischventils 10 verbunden. An der Sanitärarmatur kann somit Wasser von kalt bis zu der am Vormischventil eingestellten Maximaltemperatur gezapft werden. Solche Vormischventile kommen bevorzugt bei schutzbedürftigen Personen wie z.B. Kindern, Senioren und Behinderten zum Einsatz, um zu verhindern, daß diese Personen sich mit zu heiß eingestelltem Wasser verbrühen können.

Das erfindungsgemäße Thermostatmischventil kann aber auch in andere thermostatische Sanitärarmaturen integriert sein.

Zu der im Ausführungsbeispiel beschriebenen Ausführungsform, bei dem ein Anlüfthebel 30 die Sicherheitsfeder zusammenspannt, sind auch andere Alternativen möglich, um das Dehnstoffelement 20 in eine Spülstellung zu bewegen. So kann beispielsweise anstelle des Anlüfthebels 30 ein einrastbarer Deckel mit einem Handgriff auf dem Einstellgriff 28 vorgesehen sein, der mit einer halben Drehbewegung ausgeklinkt und herausgedreht werden kann und so die Sicherheitsfeder soweit entspannt, daß die Vorspannfeder 24 das Dehnstoffelement 20 in die Spülstellung schiebt. Nach erfolgter Heißwasserspülung wird der Deckel an dem Handgriff wieder gegen die Sicherheitsfeder durch eine halbe Drehung niedergedrückt und eingerastet.

## Patentansprüche

1. Sanitäres Thermostatmischventil mit
f) einem Gehäuse (12), das einen Kaltwasserzulauf (14), einen Warmwasserzulauf (16) und einen Mischwasserauslauf (18) aufweist;
g) einem im Gehäuse (12) angeordneten, temperaturempfindlichen und vom Misch wasser anströmbaren Thermostatelement (20), das sich normalerweise einseitig an einem Anschlag (29') abstützt;
h) einem vom Thermostatelement (20) gesteuerten Regelelement (21); und
i) einem Einstellorgan (28) für die Solltemperatur des Mischwassers, mit dem die Po sition des Regelelements (21) im Gehäuse (12) veränderbar ist,
**gekennzeichnet durch**
j) ein Spülorgan (30), mit dem der Anschlag (29') für das Thermostatelement (20) zu mindest soweit abgehoben werden kann, daß dieses den Warmwasserzulauf (16) vollständig frei gibt.

2. Thermostatmischventil nach Anspruch 1, **dadurch gekennzeichnet, daß** das Spülorgan (30) einen Anlüfthebel umfaßt.

3. Thermostatmischventil nach Anspruch 2, **dadurch gekennzeichnet, daß** das Thermostatelement (20) von einer Vorspannfeder (24) gegen den Anschlag (29') gehalten wird und der Anschlag (29') über eine Sicherheitsfeder (26) an dem Einstellorgan (28) abgestützt ist und daß der Anlüfthebel (30) so ausgebildet ist, daß er bei Betätigung die Sicherheitsfeder (26) zusammenspannt und das Regelelement (21) von der Vorspannfeder (24) in eine Position verschoben wird, in der es den Warmwasserzulauf (16) frei gibt.

4. Thermostatmischventil nach Anspruch 1, **dadurch gekennzeichnet, daß** das Thermostatelement (20) von einer Vorspannfeder (24) gegen den Anschlag (29') gehalten wird und der Anschlag (29') über eine Sicherheitsfeder (26) an dem Einstellorgan (28) abgestützt ist und daß das Spülorgan (30), so ausgebildet ist, daß es bei Betätigung die Sicherheitsfeder (26) entspannt und das Regelelement (21) von der Vorspannfeder (24) in eine Position verschoben wird, in der es den Warmwasserzulauf (16) frei gibt.

5. Thermostatmischventil nach einem der vorhergehenden Ansprüche, **gekennzeichnet durch** eine abnehmbare Abdeckkappe (34), die im aufgesetzten Zustand das Spülorgan (30) verdeckt und die so ausgebildet ist, daß sie nur in der unbetätigten Stellung des Spülorgans (30) aufsetzbar ist.

6. Thermostatmischventil nach einem der vorhergehenden Ansprüche, **gekennzeichnet durch** eine Feststellschraube (32) zum Arretieren des Einstellorgans (28).

7. Thermostatmischventil nach einem der vorhergehenden Ansprüche, **dadurch gekennzeichnet, daß** das Spülorgan (30) einen abnehmbaren Schlüssel umfaßt.

8. Thermostatmischventil nach einem der vorhergehenden Ansprüche, welches als Vormischventil ausgebildet ist.
